(19) Europäisches Patentamt

European Patent Office

Office européen des brevets

(11) Veröffentlichungsnummer: **0 045 441**
**B1**

(12) **EUROPÄISCHE PATENTSCHRIFT**

(45) Veröffentlichungstag der Patentschrift:
21.11.84

(21) Anmeldenummer: 81105794.2

(22) Anmeldetag: 22.07.81

(51) Int. Cl.³: **B 21 B 37/02,** B 21 C 51/00,
G 01 B 15/02

(54) Einrichtung zur Messung der Dicke eines aus einem Walzwerk auslaufenden Bandes.

(30) Priorität: 01.08.80 DE 3029337

(43) Veröffentlichungstag der Anmeldung:
10.02.82 Patentblatt 82/6

(45) Bekanntmachung des Hinweises auf die Patenterteilung:
21.11.84 Patentblatt 84/47

(84) Benannte Vertragsstaaten:
AT BE DE FR GB IT NL SE

(56) Entgegenhaltungen:
DE - A - 1 920 033
DE - A - 2 538 296
FR - A - 1 543 492
US - A - 2 731 212
US - A - 3 462 675

(73) Patentinhaber: Siemens Aktiengesellschaft, Berlin und
München Wittelsbacherplatz 2, D-8000 München 2 (DE)

(72) Erfinder: Engelhardt, Werner, Aufsessstrasse 13,
D-8520 Erlangen (DE)

BUNDESDRUCKEREI BERLIN

## Beschreibung

Die Erfindung betrifft eine Einrichtung zur Messung der Dicke eines aus einem Walzwerk frei auslaufenden, einer Haspel zugeführten Bandes mittels eines Dickenmeßgerätes.

Die Messung der Dicke eines aus dem Walzgerüst einer Walzenstraße auslaufenden Bandes, etwa nach dem radiometrischen Prinzip, ist aus der DE-OS 1 920 033 bekannt. Die Anwendung dieses Meßprinzipes bei einem aus dem Walzgerüst einer Walzenstraße auslaufenden Band geringer Dicke ist deshalb recht ungenau, weil solche dünnen Bänder dazu neigen, einen wellenförmigen Verlauf anzunehmen, so daß der Meßstrahl eines Dickenmeßgerätes nach dem radiometrischen Meßprinzips das Band nur im Wendepunkt eines Wellenberges oder eines Wellentales senkrecht durchdringen kann. Auf alle zwischen diesen beiden extremen liegenden Punkte trifft der Meßstrahl schräg auf das Band auf. Das Dickenmeßgerät liefert demnach nur ein ungenaues Meßergebnis.

Der Erfindung liegt die Aufgabe zugrunde, das Band im Bereich des Meßgerätes bei möglichst gleichbleibender Zugkraft horizontal und eben zu führen.

Gemäß der Erfindung wird diese Aufgabe dadurch gelöst, daß in unmittelbarer Nähe des Dickenmeßgerätes mindestens ein ein Wanderfeld erzeugender Linearinduktor in geringem Abstand von einer der Bandoberflächen angeordnet ist, wobei zur Anpassung der vom Wanderfeld des Linearinduktors auf das Band ausgeübten Zugkraft an die jeweilige Bandgeschwindigkeit der Linearinduktor von einem Umrichter gespeist ist, dessen Frequenz steuerbar ist. Dadurch ist erreicht, daß der Linearinduktor auf das Band in Walzrichtung eine von wechselnden Bandgeschwindigkeiten unabhängige und damit weitgehend konstante Zugkraft ausübt, die eine Wellenbildung des Bandes verhindert und damit Fehlmessungen ausschließt.

Es ist aus der FR-A-1 543 492 an sich bekannt, Metallbänder aus magnetischem oder nicht magnetischem Material mit Hilfe von Linearinduktoren zu führen und zu spannen, wobei zur Änderung der vom Wanderfeld des Linearinduktors auf das Band ausgeübten Kraft der Linearinduktor mit steuerbarer Frequenz gespeist wird. Dieser Druckschrift ist jedoch kein Hinweis darauf zu entnehmen, daß eine solche Vorrichtung bei der Dickenmessung eines aus einem Walzwerk auslaufenden Metallbandes angewendet werden könnte.

Ein Ausführungsbeispiel der Erfindung wird an Hand von Zeichnungen im folgenden näher erläutert.

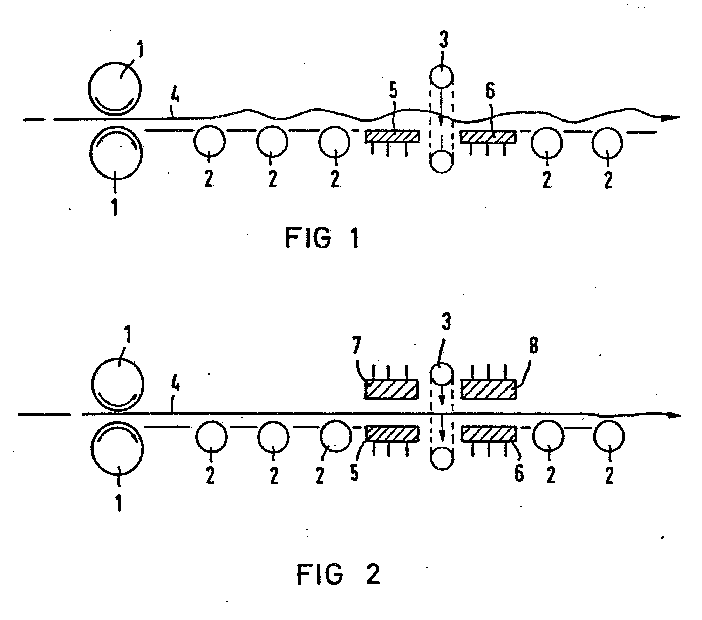

Fig. 1 zeigt ein durch die Arbeitswalzen 1 angedeutetes Walzgerüst, an das sich ein aus den Rollen 2 bestehender Rollgang anschließt. Im Zuge des Rollgangs ist ein beispielsweise mit Gammastrahlen arbeitendes Dickenmeßgerät 3 angeordnet. Unterhalb eines aus dem Walzgerüst auslaufenden Bandes 4 sind ebenfalls im Zuge des Rollgangs zwei durch Drehstrom erregbare Linearinduktoren 5, 6 eingebaut, und zwar einer vor und einer hinter dem Meßgerät. Wenn die Linearinduktoren nicht eingeschaltet sind, ergibt sich der dargestellte wellenförmige Verlauf des Bandes. In dem dargestellten Zustand trifft der Meßstrahl des Meßgerätes 3 nicht senkrecht, sondern schräg auf die Bandoberfläche und das Meßergebnis entspricht nicht der tatsächlichen Dicke des Bandes.

In Fig. 2, in der dieselben Bezugzeichen wie in Fig. 1 verwendet sind, ist der Verlauf des Bandes dargestellt, wenn die Linearinduktoren eingeschaltet sind. Abweichend von Fig. 1 sind hier zusätzlich zwei Induktoren 7 und 8 oberhalb des Bandes eingezeichnet. Zur Erzielung eines im Meßbereich horizontalen und ebenen Verlaufs des Bandes genügt es, einen der Linearinduktoren 7 bis 8 vorzusehen. Vorteilhafterweise werden jedoch mehrere Induktoren eingesetzt und zwar je ein Linearinduktor auf der Ober- und Unterfläche des Bandes vor und/oder hinter dem Meßgerät oder je ein Linearinduktor zu beiden Seiten des Meßgeräts unterhalb oder oberhalb des Bandes. Auf diese Weise wird ein einwandfreies Meßergebnis erzielt.

Die Zugkräfte, die durch die von den Linearinduktoren hervorgerufenen Wanderfelder auf das Band ausgeübt werden, können dadurch an die Bandgeschwindigkeit angepaßt werden, daß zur Speisung der Linearinduktoren frequenzgesteuerte Umrichter verwendet werden. Da durch die Linearinduktoren ein Schweben des Bandes erzielt wird, ist eine Beschädigung der Bandoberfläche ausgeschlossen.

## Patentansprüche

1. Einrichtung zur Messung der Dicke eines aus einem Walzwerk frei auslaufenden, einer Haspel zugeführten Bandes mittels eines Dickenmeßgerätes, dadurch gekennzeichnet, daß in unmittelbarer Nähe des Dickenmeßgerätes (3) mindestens ein ein Wanderfeld erzeugender Linearinduktor (5, 6, 7 oder 8) in geringem Abstand von einer der Oberflächen des Bandes (4) angeordnet ist, wobei zur Anpassung der vom Wanderfeld des Linearinduktors auf das Band ausgeübten Zugkraft an die jeweilige Bandgeschwindigkeit der Linearinduktor von einem Umrichter gespeist ist, dessen Frequenz steuerbar ist.

2. Einrichtung nach Anspruch 1, dadurch gekennzeichnet, daß je ein Linearinduktor oberhalb und/oder unterhalb (5, 7) des Bandes (4) vor und/oder hinter (6, 8) dem Meßgerät (3) angeordnet ist.

## Claims

1. Arrangement for measuring, by means of a thickness measuring device, the thickness of a strip fed to a reel and running freely from a rolling mill, characterised in that in the direct vicinity of the thickness measuring device (3) at least one linear inductor (5, 6, 7 or 8) generating a travelling field is arranged at a small distance from one of the surfaces of the strip (4), whereby in order to match the tension exerted on the strip by the travelling field of the linear inductor to the respective speed of the strip, the linear inductor is fed by a frequency converter having a controllable frequency.

2. Arrangement according to claim 1, characterised in that one linear inductor each is arranged above and/or below (5, 7) the strip (4) in front of and/or behind (6, 8) the measuring device (3).

## Revendications

1. Dispositif pour mesurer l'épaisseur d'un feuillard sortant librement d'un laminoir et envoyé à un touret, à l'aide d'un appareil à mesurer l'épaisseur, caractérisé par le fait qu'à proximité immédiate de l'appareil à mesurer l'épaisseur (3), au moins un inducteur linéaire (5, 6, 7 ou 8) produisant un champ d'ondes progressives est disposé à une faible distance de l'une des faces du feuillard (4), tandis que pour réaliser l'adaptation de la force d'attraction exercée par le champ d'ondes progressives de l'inducteur linéaire sur le feuillard à la vitesse respective de ce dernier, l'inducteur linéaire est alimenté par un convertisseur de fréquence dont la fréquence peut être commandée.

2. Dispositif suivant la revendication 1, caractérisé par le fait qu'un inducteur linéaire est disposé au-dessus et/ou au-dessous (5, 7) du feuillard (4), en amont et/ou en aval (6, 8) de l'appareil de mesure (3).

FIG 1

FIG 2